# EUROPÄISCHE PATENTANMELDUNG

(11) **EP 1 935 555 A1**
(43) Veröffentlichungstag der Anmeldung: **25.06.2008**
(21) Anmeldenummer: 07023907.4
(22) Anmeldetag: 11.12.2007
(51) Int. Cl.: B23P 21/00, B65G 17/06, B65G 37/02, B62D 65/18

(54) **Transportsystem für Baugruppen mit in einem geschlossen Kreislauf umlaufenden, begehbaren Montageplattformen**

(30) Priorität: 19.12.2006 DE 102006059886
(71) Anmelder: Emil Schmid Maschinen- und Apparatebau GmbH & Co. KG, 72820 Sonnenbühl-Willmandingen (DE)
(72) Erfinder: Schmid, Wolfgang, 72820 Sonnenbühl (DE)
(74) Vertreter: Kohler Schmid Möbus

(57) **Zusammenfassung**

Zusammenfassend beschreibt die Erfindung ein Transportsystem (1) für Baugruppen (6), die auf Montageplattformen (2) angeordnet sind, wobei die Montageplattformen (2) miteinander zu einer ebenen, geschlossenen Schleife verbunden sind und in einem Kreislauf verfahren werden. Auf den Montageplattformen (2) fährt wenigstens ein Monteur (9) mit, der alle Arbeitsschritte an der Baugruppe (6) vornimmt. Mit dem erfindungsgemäßen Transportsystem kann eine zügige und effiziente Abarbeitung, insbesondere Montage und Bearbeitung, von Baugruppen erfolgen.

## Beschreibung

Die Erfindung betrifft ein Transportsystem für zu montierende und/oder zu bearbeitende Baugruppen, umfassend mehrere Montageplattformen, wobei die Montageplattformen jeweils dazu ausgebildet sind, wenigstens eine Baugruppe zu transportieren, und wobei die Montageplattformen als geschlossene Kette miteinander verbunden sind und in einer umlaufenden Führung geführt sind.

Bei der Montage oder Bearbeitung von Baugruppen aus verschiedenen Bauteilen fallen zeitlich nacheinander verschiedene Arbeitsschritte an. Beispielsweise werden Bauteile befestigt, Löcher gebohrt, Schrauben eingesetzt und verschraubt oder dergleichen.

Ein bekanntes Vorgehen zur Abarbeitung von mehreren Arbeitsschritten an einer Baugruppe sieht vor, die abzuarbeitenden Baugruppen jeweils auf Montageplatten anzuordnen und die Montageplatten an verschiedenen Arbeitsstationen (Montage- und/oder Bearbeitungsstationen) entlang zu fördern. An den Arbeitsstationen stehen Monteure bereit, die jeweils einen einzelnen Arbeitsschritt durchführen. Die Montageplatten sind zu einer Art geschlossenem (umlaufendem) Förderband miteinander verbunden, wobei das Förderband in einer geraden Richtung übereinander hin- und zurücklauft. Nur Montageplatten an der Oberseite des Förderbands werden zum Transport von Baugruppen genutzt. An einem Ende des Förderbandes werden abzuarbeitende Baugruppen auf den Montageplatten angeordnet, am anderen Ende werden die abgearbeiteten Baugruppen entnommen.

Dieses Vorgehen erlaubt einen schnellen Transport der Baugruppen von einer Arbeitsstation zur nächsten. Nachteilig ist es allerdings, dass die Monteure an den einzelnen Arbeitsstationen recht monotone Tätigkeiten ausüben und daher schnell ermüden. Weiterhin nachteilig ist es, dass verschiedene Arbeitszeiten an den einzelnen Arbeitsstationen zu einer mangelhaften Auslastung an den Arbeitsstationen mit kürzeren Arbeitszeiten führen.

Ebenfalls bekannt ist es, Baugruppen stationär abzuarbeiten. Dies ist jedoch mit einem sehr viel aufwändigeren Transport der Baugruppen verbunden.

### Aufgabe der Erfindung

Es ist die Aufgabe der vorliegenden Erfindung, ein Transportsystem für Baugruppen vorzustellen, mit dem ein zügigeres und effektiveres Abarbeiten von Baugruppen ermöglicht wird.

### Kurze Beschreibung der Erfindung

Diese Aufgabe wird gelöst durch ein Transportsystem der eingangs vorgestellten Art, das dadurch gekennzeichnet ist, dass die Montageplattformen jeweils dazu ausgebildet sind, zusätzlich zur wenigstens einen Baugruppe gleichzeitig auch wenigstens einen Monteur zu transportieren, und dass das Transportsystem so ausgebildet ist, dass die Montageplattformen während eines gesamten Umlaufs eben ausgerichtet bleiben.

Mithilfe des erfindungsgemäßen Transportsystems ist es möglich, dass ein Monteur oder mehrere Monteure längere Zeit bei einer abzuarbeitenden Baugruppe verbleiben können und somit eine Vielzahl von Arbeitsschritten, insbesondere verschiedenen, nicht-monotonen Arbeitsschritten, an der Baugruppe durchführen können. Auf jeder Montageplattform ist ausreichend Platz, so dass der Monteur alle gewünschten Montage- und Bearbeitungsschritte an einer dort angeordneten Baugruppe ausführen kann. Der wenigstens eine Monteur fährt sozusagen auf der Montageplattform mit der Baugruppe mit. Für die Abarbeitung der Baugruppe notwendige Werkzeuge oder Bauteile können auf der Montageplattform mitgeführt werden. In der Regel hat eine einzelne Montageplattform eine gesamte Nutzfläche (an ihrer Oberseite) für Baugruppe, Monteur(e), lokale Lager usw. von wenigstens 3 m².

Dabei wird die Baugruppe in einem geschlossenen Kreislauf verfahren, so dass ein einfaches Anliefern der zu bearbeitenden Baugruppen und ein einfaches Abtransportieren der bearbeiteten Baugruppen möglich ist. Anliefern und Abtransportieren kann für jede Montageplattform jeweils am gleichen Ort und mit den gleichen Einrichtungen erfolgen. Ebenfalls kann ein Monteur bei einem Baugruppenwechsel auf (oder aus Sicherheitsgründen lediglich in der Nähe) seiner Montageplattform bleiben und steht schnell für die Bearbeitung der nächsten Baugruppe zur Verfügung.

Die Montageplattformen verbleiben während eines gesamten Umlaufs eben (horizontal) ausgerichtet, so dass eine Baugruppe stets sicher steht und gut vom Monteur zu handhaben ist. Die Montageplattform ist während des gesamten Umlaufs für den Baugruppentransport bzw. die Abarbeitung der Baugruppe nutzbar.

Der Fahrweg der umlaufenden Montageplattformen kann weiterhin sehr frei gestaltet werden, insbesondere ist kein geradliniger Verlauf des Fahrwegs notwendig. Typische Ausgestaltungen des Fahrwegs (bestimmt durch die umlaufende Führung) sind rund, insbesondere kreisrund, oval, oder auch meanderförmig (typischerweise jeweils in einer horizontalen Ebene). Dadurch kann eine raumsparende Anpassung an die lokalen Platzverhältnisse (etwa benachbarte Maschinen und Wände) erfolgen.

Eine Baugruppe kann beispielsweise eine Sitzgruppe für Kraftfahrzeuge sein, die aus Bauteilen wie Grundgestell, Polstern und Lehnen zusammengesetzt wird.

### Bevorzugte Varianten der Erfindung

Bei einer bevorzugten Ausführungsform eines erfindungsgemäßen Transportsystems verläuft die umlaufende Führung eben. Dadurch kann sehr einfach eine ebene (horizontale) Ausrichtung jeder Montageplattform über den gesamten Umlauf sichergestellt werden.

Bevorzugt ist dabei eine Weiterbildung dieser Ausführungsform, bei der die umlaufende Führung in der Ebene mäanderförmig verläuft. Dies gestattet eine besonders gute Anpassung an lokale Platzverhältnisse.

Vorteilhaft ist eine Ausführungsform, die vorsieht, dass jede Montageplattform bei Anwesenheit der wenigstens einen Baugruppe eine für den wenigstens einen Monteur begehbare Fläche von wenigstens 1 m², bevorzugt wenigstens 2 m² umfasst. Dies reicht in der Regel aus, um ein bequemes und damit ermüdungsarmes Arbeiten eines Monteurs sicherzustellen. Die begehbare Fläche ist bevorzugt so angeordnet, dass ein Monteur während des Abarbeitens einer Baugruppe die Montageplattform nicht zu verlassen braucht (etwa um die Seite der Baugruppe zu wechseln). Typischerweise beträgt die Fläche einer Montageplattform insgesamt zwischen 3 und 10 m².

Vorteilhaft ist weiterhin eine Ausführungsform, bei der ein motorischer Antrieb vorgesehen ist, mittels dessen die Montageplattformen entlang der umlaufenden Führung verfahren werden können. Bevorzugt ist ein elektromotorischer Antrieb vorgesehen.

Eine Weiterbildung dieser Ausführungsform sieht vor, dass der motorische Antrieb mittels Reibrädern erfolgt, insbesondere wobei die Reibräder an einem an der Unterseite einer jeden Montageplattform ausgebildeten Fuß angreifen. Dies hat sich in der Praxis bewährt. Bevorzugt ist dabei ein Motor entfernt vom Reibrad angeordnet und überträgt Kraft auf das Reibrads mittels eines Riemens, beispielsweise eines Zahnriemens. Typischerweise sind mehr Montageplattformen als Reibräderanordnungen vorgesehen, und die Montageplattformen schieben oder (bevorzugt) ziehen sich gegenseitig, beispielsweise mittels Anlenkstangen, Ketten- oder Seilverbindungen.

Bevorzugt ist auch eine Ausführungsform, bei der die Montageplattformen wenigstens drei, bevorzugt vier lenkbare Rollen an ihrer Unterseite aufweisen. Auf den lenkbaren Rollen ruht die Montageplattform (zumindest teilweise). Die lenkbaren Rollen erleichtern eine Verschiebung einer Montageplattform entlang einer Kurve.

Bevorzugt ist es weiterhin, wenn die Montageplattformen im Wesentlichen kreisförmig ausgebildet sind. Bevorzugt beträgt der Durchmesser einer Montageplattform wenigstens 2,5 m. Die Kreisform erleichtert die Ausgestaltung des Transportsystems bei kurvigen Fahrwegen.

Ganz besonders bevorzugt ist eine Ausführungsform, gemäß der die Montageplattformen über Zwischenstücke miteinander verbunden sind, insbesondere wobei die Zwischenstücke sich unmittelbar an die Montageplattformen anschließen. Die Zwischenstücke sperren den Zwischenraum zwischen benachbarten Montageplattformen von oben ab und beugen so Unfällen vor.

Bevorzugt ist auch eine Ausführungsform, bei der die umlaufende Führung eine U-förmige Schiene umfasst. In die U-förmige Schiene kann beispielsweise eine frei bewegliche Rolle, die an der Unterseite einer jeden Montageplattform befestigt ist, eingreifen und so die verketteten Montageplattformen führen. Dies hat sich in der Praxis bewährt.

Vorteilhaft ist eine Ausführungsform, die vorsieht, dass entlang der umlaufenden Führung eine Übergabestation vorgesehen ist, an der sowohl eine Baugruppe auf einer Montageplattform angeordnet als auch eine Baugruppe von einer Montageplattform entfernt werden kann. Dann kann der gesamte, verbleibende Fahrweg für die Abarbeitung von Baugruppen genutzt werden.

Eine ebenfalls vorteilhafte Ausführungsform ist dadurch gekennzeichnet, dass eine Einschleusstation vorgesehen ist, an der eine Baugruppe auf einer Montageplattform angeordnet werden kann, und dass eine Ausschleusstation vorgesehen ist, an der eine Baugruppe von einer Montageplattform entfernt werden kann, und dass die Einschleusstation und die Ausschleusstation benachbart zueinander entlang der umlaufenden Führung angeordnet sind. Auch dann kann der gesamte, verbleibende Fahrweg für die Abarbeitung von Baugruppen genutzt werden.

Vorteilhaft ist auch eine Ausführungsform, bei der entlang der umlaufenden Führung wenigstens eine Zusatzstation vorgesehen ist, insbesondere wobei die Zusatzstation ein Werkzeuglager und/oder ein Teilelager umfasst. Von der Zusatzstation kann sich der wenigstens eine Monteur Material oder Gegenstände holen, entweder zur unmittelbaren Verwendung an der Baugruppe oder für ein lokales Lager auf der Montageplattform.

Weiterhin vorteilhaft ist eine Ausführungsform, bei der auf jeder Montageplattform ein lokales Lager für Werkzeuge und/oder zu montierende Teile vorgesehen ist. Dies erspart Laufwege für den wenigstens einen Monteur.

In den Rahmen der vorliegenden Erfindung fällt auch ein Verfahren zur Montage und/oder Bearbeitung von Baugruppen, insbesondere mittels eines oben beschriebenen, erfindungsgemäßen Transportsystems, wobei eine Mehrzahl von Montageplattformen, die als geschlossene Kette miteinander verbunden sind, entlang einer umlaufenden Führung verfahren werden, dadurch gekennzeichnet, dass die Montageplattformen während eines gesamten Umlaufs eben ausgerichtet bleiben, und dass sich zumindest während eines Teils eines Umlaufs einer Montageplattform auf der Montageplattform wenigstens ein Monteur und wenigstens eine Baugruppe befinden, wobei der Monteur an der Baugruppe Montagearbeiten durchführt. Im Rahmen dieses Verfahrens ist eine zügige und effektive Abarbeitung von Baugruppen möglich.

Eine vorteilhafte Variante des erfindungsgemäßen Verfahrens sieht vor, dass der Transport der Montageplattformen kontinuierlich verläuft. Die Montageplattformen werden mit konstanter Geschwindigkeit verfahren. Dadurch werden Beschleunigungen der Montageplattformen minimiert, was die Arbeitssicherheit für den wenigstens einen mitfahrenden Monteur erhöht und ihm das Arbeiten allgemein erleichtert.

Bei einer alternativen, ebenfalls vorteilhaften Verfahrensvariante verläuft der Transport der Montageplattformen getaktet. Die Montageplattformen werden abwechselnd verfahren und einige Zeit angehalten. Dies erleichtert das Einbringen und Entnehmen von Baugruppen zu und von den Montageplattformen. Gegebenenfalls können auch stationäre Zusatzstationen besser und/oder ungefährlicher genutzt werden.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

### Zeichnung

Die Erfindung ist in der Zeichnung dargestellt und wird nachfolgend näher erläutert.

Es zeigen:
- Fig. 1: ein erfindungsgemäßes Transportsystem in schematischer Aufsicht;
- Fig. 2: ein schematischer Querschnitt durch eine Montageplattform aus Fig. 1.

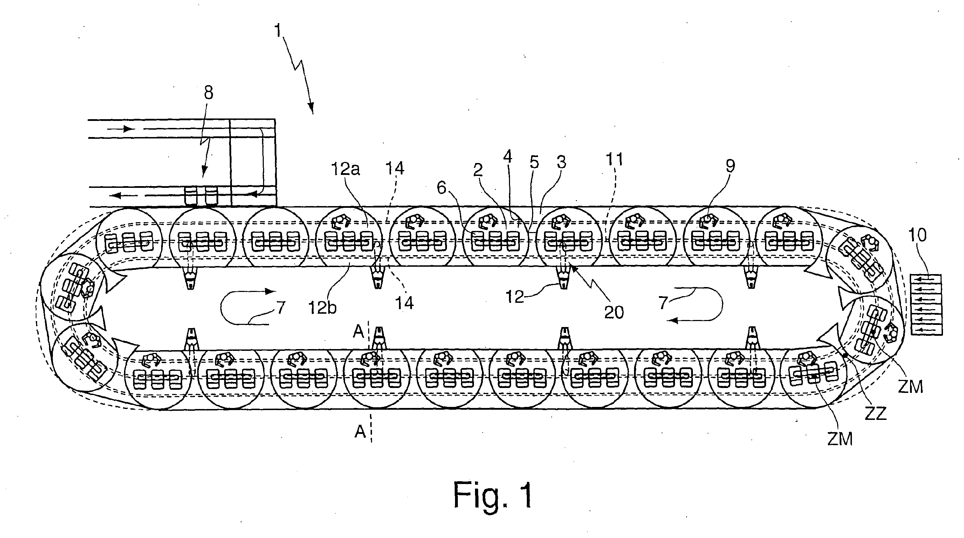

In der **Figur 1** ist ein erfindungsgemäßes Transportsystem 1 schematisch in einer Aufsicht dargestellt. Das Transportsystem 1 weist eine Vielzahl von Montageplattformen (oder Arbeitsplattformen) 2 auf, die über Zwischenstücke 3 miteinander verbunden sind. Die Montageplattformen 2 und die Zwischenstücke 3 bilden eine geschlossene Kette in einer horizontalen Ebene. Dazu werden beispielsweise Verbindungsstangen (nicht eingezeichnet) eingesetzt, die jeweils im Zentrum ZM einer Montageplattform 2 und im Zentrum ZZ eines Zwischenstücks 3 angreifen. Die Verbindungsstangen verlaufen an der Unterseite der Montageplattformen.

Die Montageplattformen 2 weisen kreisbogenförmige Außenkanten 4 auf, die jeweils an ebenfalls kreisbogenförmige Außenkanten 5 der Zwischenstücke 3 angrenzen. Der Abstand ist dabei so klein (ca. 3 mm oder weniger), dass es nicht möglich ist, Körperteile (insbesondere Füße oder Finger) einzuklemmen.

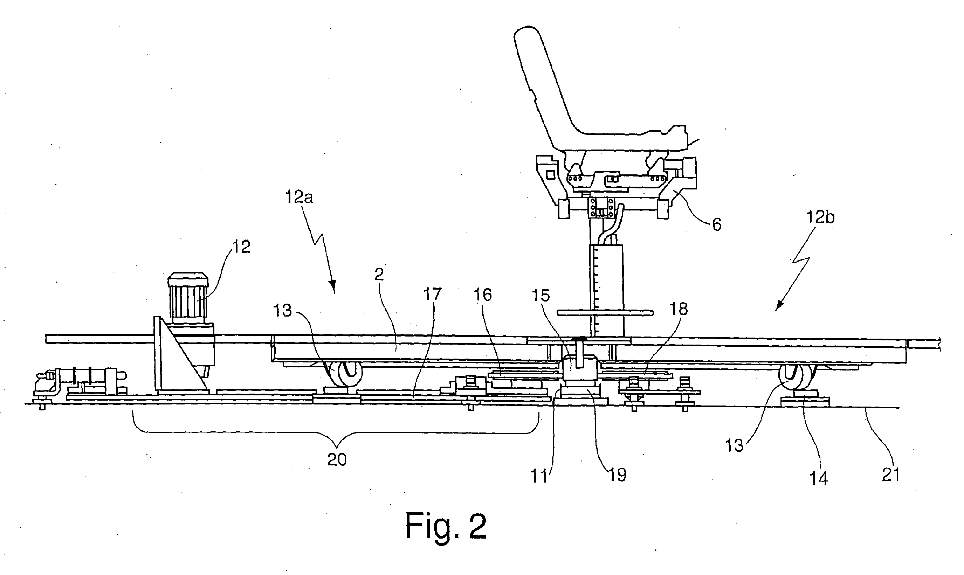

Die verketteten Montageplattformen 2 laufen in Pfeilrichtung 7 in einem Kreislauf um. Jede Montageplattform 2 ist dazu gegenüber den unmittelbar benachbarten Zwischenstücken 3 drehbar (vgl. Kurven links und rechts in Fig. 1). Der Antrieb erfolgt über mehrere Motoren 12 (vgl. Fig. 2). In der gezeigten Ausführungsform werden die Montageplattformen 2 in einer U-förmigen Schiene als umlaufende Führung 11 geführt. Die umlaufende Führung 11 bestimmt den Fahrweg der verketteten Montageplattformen 2, der hier näherungsweise oval verlauft.

Auf den Montageplattformen 2 ist jeweils eine Baugruppe 6 angeordnet. Die Baugruppe 6 ist auf ihrer Montageplattform 2 ortsfest. In der gezeigten Ausführungsform werden abgearbeitete Baugruppen 6 an einer Übergabestation 8 von einer ankommenden Montageplattform 2 entfernt und noch abzuarbeitende Baugruppen 6 werden ebenfalls an dieser Übergabestation 8 auf freien bzw. freigewordenen Montageplattformen 2 angeordnet.

Auf jeder Montageplattform 2 fährt ein Monteur (Werker) 9 mit. Dieser Monteur 9 führt an der Baugruppe 6 verschiedene Arbeitsschritte, insbesondere Montage- und Bearbeitungsschritte, nacheinander durch. Beispielsweise bohrt er Löcher, setzt Bauteile an, montiert Befestigungen mittels Schrauben und Muttern und dergleichen. Lediglich während eines Baugruppenwechsels an der Übergabestation 8 verlässt der Monteur 9 aus Sicherheitsgründen seine Montageplattform 2. Während dieser Zeit kann er beispielsweise neben seiner verketteten Montageplattform 2 herlaufen.

Im gezeigten Ausführungsbeispiel haben die Montageplattformen 2 einen Durchmesser von ca. 3 m. Beiderseits der Baugruppe 6 verbleibt jeweils eine freie, für den Monteur 9 betretbare Fläche 12a, 12b von jeweils ca. 1 x 2 m, also 2 m². Der Monteur 9 nutzt im gezeigten Ausführungsbeispiel zunächst die jeweils äußere Fläche 12a, und anschließend die innere Fläche 12b.

Der Fahrweg der verketteten Montagestationen 2 führt an einer Zusatzstation 10 vorbei, an der diverse Bauteile und/oder Werkzeuge lagern. Dort entnimmt ein Monteur 9 nach Bedarf (beispielsweise alle 10 Umläufe) Bauteile und/oder Werkzeuge und nimmt sie mit auf seine Montageplattform 2. Beispielsweise können zu diesem Zweck mehrere Bauteile jeweils auf einer Palette angeordnet sein, und der Monteur 9 nimmt eine Palette mit auf seine Montageplattform 2, wodurch Zeit gespart werden kann. Damit legt der Monteur auf seiner Montageplattform 2 ein lokales Lager an (nicht eingezeichnet).

In der **Figur 2** ist ein schematischer Querschnitt entlang der Linie A-A in Fig. 1 durch das erfindungsgemäße Transportsystem und insbesondere durch eine Montageplattform 2 dargestellt. Auf der Oberseite der Montageplattform 2 ist die Baugruppe 6, hier eine Sitzbank für einen PKW, angeordnet.

Die Montageplattform 2 weist an ihrer Unterseite vier lenkbare (um eine vertikale Achse frei drehbare) Rollen 13 auf, die auf Schienen 14, die am Boden befestigt sind, abrollen. Auf diesen stützt sich die Montageplattform 2 im Wesentlichen ab.

Weiterhin verfügt die Montageplattform 2 an ihrer Unterseite über einen Fuß 15, der gegenüber der Unterseite nach unten hervorsteht. Am Fuß 15 greift seitlich ein Reibrad 16 an, welches über einen Zahnriemen 17 von einem Motor 12 angetrieben wird. Auf der anderen Seite des Fußes 15 greift ein antriebsloses, frei drehbares Gegenrad 18 an, welches am Fußboden 21 gelagert ist. Das Reibrad 16 rollt am Fuß 15, der senkrecht zur Zeichenebene länglich ausgebildet ist, ab, so dass die Montageplattform 2 senkrecht zur Zeichenebene verfahren wird.

Dabei wird die Bewegungsrichtung der Montageplattform 2 mittels der umlaufenden Führung 11 bestimmt, in die eine frei drehbare Rolle 19 von oben eingreift. Die umlaufende Führung 11 ist im Querschnitt U-förmig, mit nach oben offenem U. Die frei drehbare Rolle 19 ist wiederum am Fuß 15 - und damit an der Montageplattform 2 - gelagert.

Motor 12, Zahnriemen 17 und Reibrad 16 bilden eine Antriebseinheit 20 für die verketteten Montageplattformen 2. Entlang des Fahrwegs der verketteten Montageplattformen 2 sind mehrere Antriebseinheiten 20 verteilt, so dass jederzeit zumindest ein Teil der Antriebseinheiten 20 gerade an Füßen 15 von Montageplattformen 2 angreift, so dass stets genügend Antriebskraft für die Gesamtheit der verketteten Montageplattformen 2 zur Verfügung steht. Der Antrieb kann alternativ mit konstanter Geschwindigkeit oder auch getaktet erfolgen.

Alternativ ist es auch möglich, anstelle der Montageplattformen 2 die Zwischenstücke 3 mittels der Antriebseinheiten 20 anzutreiben.

Zusammenfassend beschreibt die Erfindung ein Transportsystem für Baugruppen, die auf Montageplattformen angeordnet sind, wobei die Montageplattformen miteinander zu einer ebenen, geschlossenen Schleife verbunden sind und in einem Kreislauf verfahren werden. Auf den Montageplattformen fährt wenigstens ein Monteur mit, der alle Arbeitsschritte an der Baugruppe zwischen Einschleusen und Ausschleusen der Baugruppe vornimmt. Mit dem erfindungsgemäßen Transportsystem kann eine zügige und effiziente Abarbeitung, insbesondere Montage und Bearbeitung, von Baugruppen erfolgen.

## Patentansprüche

1. Transportsystem (1) für zu montierende und/oder zu bearbeitende Baugruppen (6), umfassend mehrere Montageplattformen (2), wobei die Montageplattformen (2) jeweils dazu ausgebildet sind, wenigstens eine Baugruppe (6) zu transportieren, und wobei die Montageplattformen (2) als geschlossene Kette miteinander verbunden sind und in einer umlaufenden Führung (11) geführt sind, **dadurch gekennzeichnet, dass** die Montageplattformen (2) jeweils dazu ausgebildet sind, zusätzlich zur wenigstens einen Baugruppe (6) gleichzeitig auch wenigstens einen Monteur (9) zu transportieren, und dass das Transportsystem (1) so ausgebildet ist, dass die Montageplattformen (2) während eines gesamten Umlaufs eben ausgerichtet bleiben.

2. Transportsystem (1) nach Anspruch 1, **dadurch gekennzeichnet, dass** die umlaufende Führung (11) eben verläuft.

3. Transportsystem (1) nach Anspruch 2, **dadurch gekennzeichnet, dass** die umlaufende Führung (11) in der Ebene mäanderförmig verläuft.

4. Transportsystem (1) nach einem der vorhergehenden Ansprüche, **dadurch gekennzeichnet, dass** jede Montageplattform (2) bei Anwesenheit der wenigstens einen Baugruppe (6) eine für den wenigstens einen Monteur (9) begehbare Fläche (12a, 12b) von wenigstens 1 m², bevorzugt wenigstens 2 m² umfasst.

5. Transportsystem (1) nach einem der vorhergehenden Ansprüche, **dadurch gekennzeichnet, dass** ein motorischer Antrieb vorgesehen ist, mittels dessen die Montageplattformen (2) entlang der umlaufenden Führung (11) verfahren werden können.

6. Transportsystem (1) nach Anspruch 5, **dadurch gekennzeichnet, dass** der motorische Antrieb mittels Reibrädern (16) erfolgt, insbesondere wobei die Reibräder (16) an einem an der Unterseite einer jeden Montageplattform (2) ausgebildeten Fuß (15) angreifen.

7. Transportsystem (1) nach einem der vorhergehenden Ansprüche, **dadurch gekennzeichnet, dass** die Montageplattformen (2) wenigstens drei, bevorzugt vier lenkbare Rollen (13) an ihrer Unterseite aufweisen.

8. Transportsystem (1) nach einem der vorhergehenden Ansprüche, **dadurch gekennzeichnet, dass** die Montageplattformen (2) im Wesentlichen kreisförmig ausgebildet sind.

9. Transportsystem (1) nach einem der vorhergehenden Ansprüche, **dadurch gekennzeichnet, dass** die Montageplattformen (2) über Zwischenstücke (3) miteinander verbunden sind, insbesondere wobei die Zwischenstücke (3) sich unmittelbar an die Montageplattformen (2) anschließen.

10. Transportsystem (1) nach einem der vorhergehenden Ansprüche, **dadurch gekennzeichnet, dass** die umlaufende Führung (11) eine U-förmige Schiene umfasst.

11. Transportsystem (1) nach einem der Ansprüche 1 bis 10, **dadurch gekennzeichnet, dass** entlang der umlaufenden Führung (11) eine Übergabestation (8) vorgesehen ist, an der sowohl eine Baugruppe (6) auf einer Montageplattform (2) angeordnet als auch eine Baugruppe (6) von einer Montageplattform (2) entfernt werden kann.

12. Transportsystem (1) nach einem der Ansprüche 1 bis 10, **dadurch gekennzeichnet, dass** eine Einschleusstation vorgesehen ist, an der eine Baugruppe (6) auf einer Montageplattform (2) angeordnet werden kann, dass eine Ausschleusstation vorgesehen ist, an der eine Baugruppe (6) von einer Montageplattform (2) entfernt werden kann, und dass die Einschleusstation und die Ausschleusstation benachbart zueinander entlang der umlaufenden Führung angeordnet sind.

13. Transportsystem (1) nach einem der vorhergehenden Ansprüche, **dadurch gekennzeichnet, dass** entlang der umlaufenden Führung (11) wenigstens eine Zusatzstation (10) vorgesehen ist, insbesondere wobei die Zusatzstation (10) ein Werkzeuglager und/oder eine Teilelager umfasst.

14. Transportsystem (1) nach einem der vorhergehenden Ansprüche, **dadurch gekennzeichnet, dass** auf jeder Montageplattform (2) ein lokales Lager für Werkzeuge und/oder zu montierende Teile vorgesehen ist.

15. Verfahren zur Montage und/oder Bearbeitung von Baugruppen (6), insbesondere mittels eines Transportsystems (1) nach einem der vorhergehenden Ansprüche, wobei eine Mehrzahl von Montageplattformen (2), die als geschlossene Kette miteinander verbunden sind, entlang einer umlaufenden Führung (11) verfahren werden, **dadurch gekennzeichnet, dass** die Montageplattformen (2) während eines gesamten Umlaufs eben ausgerichtet bleiben, und dass sich zumindest während eines Teils eines Umlaufs einer Montageplattform (2) auf der Montageplattform (2) wenigstens ein Monteur (9) und wenigstens eine Baugruppe (6) befinden, wobei der Monteur (9) an der Baugruppe (6) Montagearbeiten durchführt.

16. Verfahren nach Anspruch 12, **dadurch gekennzeichnet, dass** der Transport der Montageplattformen (2) kontinuierlich verläuft.

17. Verfahren nach Anspruch 12, **dadurch gekennzeichnet, dass** der Transport der Montageplattformen (2) getaktet verläuft.
